# FASCICULE DE BREVET EUROPEEN

(11) **EP 1 574 735 B1**
(45) Date de publication et mention de la délivrance du brevet: **08.05.2013**
(21) Numéro de dépôt: 05300166.5
(22) Date de dépôt: 07.03.2005
(51) Int. Cl.: F16D 25/12

(54) **Système d'embrayage pour véhicule**
Kupplungsbetätigungssystem für Kraftfahrzeuge
Clutch actuation system for vehicles

(30) Priorité: 12.03.2004 FR 0402604
(43) Date de publication de la demande: 14.09.2005
(73) Titulaire: Renault s.a.s., 92100 Boulogne Billancourt (FR)
(72) Inventeur: Gauci, Anthony, 91120 Palaiseau (FR)

(56) Documents cités:
- EP-A- 1 249 627
- DE-A- 3 714 211
- GB-A- 1 197 320
- GB-A- 1 512 603
- GB-A- 2 404 230

## Description

La présente invention concerne, de façon générale, un système d'embrayage pour véhicule.

Plus particulièrement, l'invention concerne un système d'embrayage hydraulique comportant une pédale d'embrayage, un émetteur hydraulique d'embrayage ayant une chambre dans laquelle coulisse un piston adapté pour être poussé par une tige d'actionnement depuis une position maximale d'embrayage jusqu'à une position de débrayage, le piston adoptant une position intermédiaire lors de son coulissement entre la position maximale d'embrayage et la position de débrayage, la tige d'actionnement étant reliée à la pédale d'embrayage sur laquelle un ressort d'assistance exerce un couple variable, l'émetteur comportant des moyens élastiques de rappel du piston dans sa position maximale d'embrayage, et ces moyens élastiques de rappel présentant une raideur variable en fonction de la position du piston et maximale lorsque le piston est situé entre sa position intermédiaire et sa position maximale de débrayage.

Un système d'embrayage de ce type est par exemple décrit dans le document de brevet DE 10 2004 010 814.

Des systèmes voisins sont décrits dans les documents de brevets GB 2 404 230 et US 5 127 506.

Les systèmes d'embrayage de véhicule doivent être ergonomiques pour le conducteur du véhicule.

C'est la raison pour laquelle de nombreux fabricants de systèmes d'embrayage ont développé diverses solutions visant à réduire les efforts de débrayage à la pédale d'embrayage (efforts générés lors de l'enfoncement de la pédale), en installant des ressorts d'assistance à la pédale sur le système d'embrayage.

Un système d'embrayage doté d'une telle fonction d'assistance au débrayage est par exemple décrit dans le document brevet US 6 460, 449, dont le système d'embrayage est schématisé sur la figure 1.

Ce système d'embrayage comporte un émetteur hydraulique d'embrayage 3 formé par une chambre 4 dans laquelle coulisse un piston 5 poussé par une tige d'actionnement 6. La tige d'actionnement 6 est en appui ponctuel contre le piston 5 et permet de transmettre un effort de poussée sur le piston généré par un mouvement d'enfoncement de la pédale d'embrayage 2.

Un moyen élastique de rappel 11 formé par un second ressort 14 de compression placé à l'intérieur de la chambre 4 permet de pousser le piston 5 contre la tige d'actionnement, et cela sur toute la course du piston 5, c'est à dire entre la position maximale d'embrayage 7 et la position de débrayage 8. Le moyen élastique de rappel 11 à pour fonction de ramener le piston dans sa position maximale d'embrayage, lorsque la pédale n'est plus enfoncée.

Un ressort d'assistance 10 précontraint en compression est en appui entre un point fixe relié au châssis du véhicule et un point mobile de la pédale permet d'exercer sur la pédale 2 un effort selon un axe d'effort 19. Au cours de l'enfoncement de la pédale l'axe d'effort 19 se déplace en tournant autour d'un pivot d'assistance fixe 21. Lorsque le piston de l'émetteur 3 est en position maximale d'embrayage, l'axe d'effort 19 est positionné de manière à faire pivoter la pédale dans un sens anti trigonométrique et exerce sur la pédale une force ayant tendance à la faire remonter. Lorsque la pédale est enfoncée, la pédale pivote autour de son axe fixe 17 de rotation. L'axe d'effort 19 passant par le pivot d'assistance 21 et par un point de contact entre le ressort d'assistance 10 et la pédale 2, pivote également autour du pivot d'assistance. Lorsque le point de contact entre le ressort d'assistance 10 et la pédale 2 se retrouve aligné entre le pivot d'assistance 21 et l'axe fixe 17 de pivotement de la pédale 2, le ressort exerce un effort sur la pédale 2 selon un axe d'effort 19, tel que le couple de rotation de la pédale 2 créé par le ressort d'assistance 10 est nul. Le système 1 est alors dit en position de chevillement.

En poursuivant l'enfoncement de la pédale 2 l'axe d'effort 19 poursuit sa rotation autour du pivot d'assistance 21 et l'effort exercé par le ressort d'assistance 10 sur la pédale 2 est alors tel qu'il crée un couple favorisant l'enfoncement de la pédale et par là même, le passage du piston vers sa position de débrayage 8.

Un tel ressort d'assistance 10 permet donc de réduire avantageusement l'effort d'enfoncement de la pédale 2, et assiste le conducteur lors du débrayage.

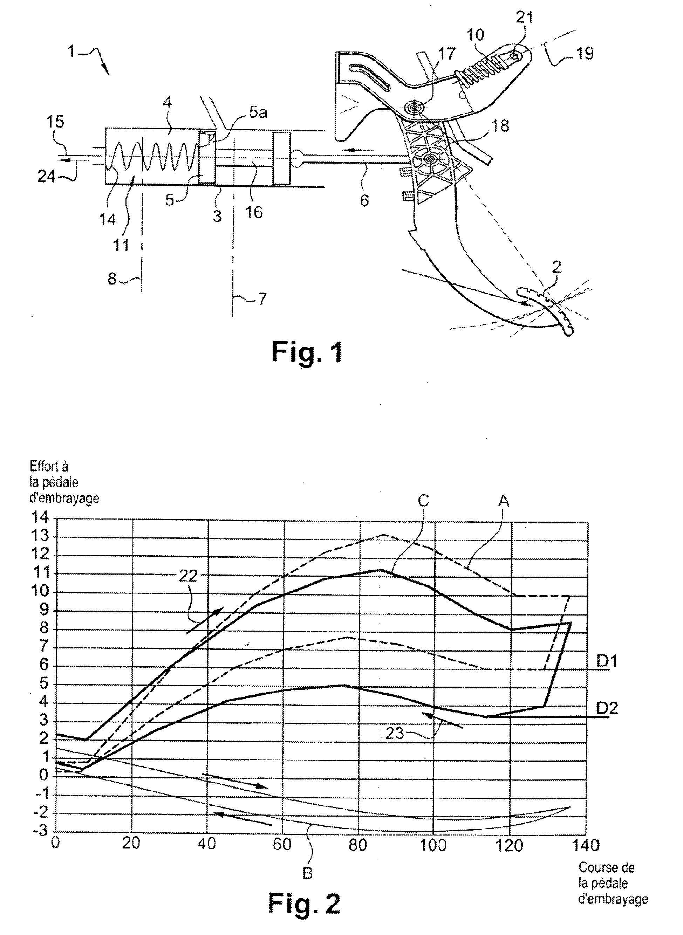

Le graphique de la figure 2 montre l'effort au patin de la pédale d'embrayage 2 en fonction de la course de la pédale dans le sens de débrayage 22 (enfoncement de la pédale) et de rembrayage 23 (remontée de la pédale).

La courbe A représente l'effort à la pédale en fonction de la course de la pédale dans le cas où aucun ressort d'assistance au débrayage 10 n'est utilisé.

La courbe B représente la loi d'assistance et l'effort généré par le ressort d'assistance au débrayage 10 en fonction de la course de la pédale 2.

La courbe C représente l'effort à la pédale en fonction de la course de la pédale dans le cas où un ressort d'assistance au débrayage 10 est utilisé. Cette courbe C peut être obtenue par addition des efforts des courbes A et B.

La courbe C met en évidence une différence d'effort à la pédale selon que l'on soit dans le sens de débrayage 22 ou dans le sens de l'embrayage 23. Ainsi, pour une même position de la pédale, l'effort d'embrayage est en général inférieur à l'effort de débrayage. La loi d'assistance (courbe B) réduit à la fois l'effort résultant à la pédale 2 lors du débrayage 22 et l'effort résultant à la pédale 2, lors du rembrayage 23. L'effort minimum de rembrayage 23 (noté D1 sur la courbe A et D2 sur la courbe C) varie donc en fonction de la loi d'assistance au débrayage B.

Le niveau d'assistance maximum applicable au débrayage est donc limité car l'effort de retour doit être suffisant pour assurer le retour de la pédale lors du rembrayage. Il est évalué que l'effort de retour minimum doit au moins être de 3daN (mesuré en statique) ou de 1,5daN si la mesure est faite en dynamique, cette réduction étant liée à l'effet d'inertie de la pédale lors de son mouvement de remontée vers la position embrayée.

Dans ce contexte, la présente invention a pour but de proposer un système d'embrayage permettant de réduire les efforts de débrayage sur la plus grande partie de la course de la pédale, par rapport aux dispositifs de l'art antérieur tout en permettant un effort de retour minimum satisfaisant.

A cette fin, le système d'embrayage hydraulique de l'invention, par ailleurs conforme à la définition générique qu'en donne le préambule énoncé précédemment, est essentiellement caractérisé en ce que ledit couple variable évolue, en fonction de la position de la pédale d'embrayage, et selon que le piston se trouve entre sa position maximale d'embrayage et ladite position intermédiaire ou entre sa position intermédiaire et sa position de débrayage, entre un couple rappelant le piston vers sa position maximale d'embrayage et un couple d'assistance au coulissement du piston vers sa position de débrayage, ce couple variable passant par une valeur nulle pour ladite position intermédiaire du piston, dite position de chevillement.

Grâce à son agencement, le système selon l'invention permet d'augmenter l'effort minimum de rembrayage 23 par rapport aux système d'embrayage de l'art antérieur.

Cette augmentation relative se faisant sur une portion de la course de coulissement du piston, et plus particulièrement à l'endroit où l'effort de rembrayage D2 est le plus faible.

L'effort minimum de rembrayage étant augmenté par rapport au dispositif de l'art antérieur, il est alors possible grâce au dispositif selon l'invention d'accroître l'effort d'assistance au débrayage généré par le ressort d'assistance 10, par rapport aux systèmes de l'art antérieur.

De ce fait le système selon l'invention permet une assistance au débrayage améliorée par rapport aux systèmes de l'art antérieur.

On peut par exemple faire en sorte que les moyens élastiques de rappel aient une raideur minimale lorsque le piston est situé entre la position intermédiaire et la position maximale d'embrayage. Ainsi l'effort à la pédale est minimisé lorsque le piston est situé entre la position intermédiaire et la position maximale d'embrayage.

Les moyens élastiques de rappel peuvent également comporter un premier ressort adapté pour exercer une première force élastique sur le piston, uniquement lorsque celui-ci est positionné entre la position intermédiaire et la position de débrayage. Ce mode de réalisation permet d'augmenter simplement la raideur globale des moyens élastiques de rappel sur la portion de la course de coulissement du piston située entre la position intermédiaire et la position de débrayage. La courbe de raideur des moyens élastiques de rappel en fonction de l'enfoncement de la pédale à donc deux pentes.

Avantageusement, le premier ressort est un ressort de compression disposé à l'intérieur de la chambre et adapté pour exercer une première force élastique opposée au coulissement du piston, de sa position intermédiaire vers sa position de débrayage, et pour n'exercer aucune force élastique sur le piston, lors de son coulissement entre sa position maximale d'embrayage et sa position intermédiaire. Ce mode de réalisation particulier permet d'obtenir un moyen élastique de rappel à raideur variable composé de deux raideurs, la raideur minimale étant située entre la position d'embrayage maximale et la position intermédiaire et la raideur maximale étant située entre la position intermédiaire et la position de débrayage. Ce mode de réalisation est également avantageux car la tolérance de positionnement et de dimensionnement d'un tel premier ressort peut être large sans pour autant réduire l'intérêt de l'invention pour l'assistance au débrayage. Le fait que ce premier ressort soit positionné à l'intérieur de la chambre n'augmente en rien l'encombrement du système d'embrayage. Ce ressort permet donc une loi d'assistance « bi-pente » variable en fonction de la position de la pédale.

Selon un mode de réalisation complémentaire, les moyens élastiques de rappel comportent un second ressort adapté pour exercer une seconde force élastique sur le piston, croissante lors du coulissement du piston de sa position maximale d'embrayage à sa position de débrayage. Les premier et second ressorts peuvent être placés coaxiallement l'un par rapport à l'autre, dans la chambre de l'émetteur.

Le second ressort permet de ramener le piston dans sa position d'embrayage, même lorsque la tige d'actionnement du piston n'exerce aucun effort sur celui-ci.

D'autres caractéristiques et avantages de l'invention ressortiront clairement de la description qui en est faite ci-après, à titre indicatif et nullement limitatif, en référence aux dessins annexés, dans lesquels:
la figure 1 représente un système d'embrayage hydraulique de l'art antérieur ;
la figure 2 représente un graphique des efforts à la pédale en fonction de la course de la pédale pour un système de l'art antérieur ;
la figure 3 représente un système d'embrayage selon l'invention ;
la figure 4 représente des courbes d'efforts à la pédale d'embrayage, en fonction de la course de la pédale pour le système selon l'invention avec et sans ressort d'assistance.

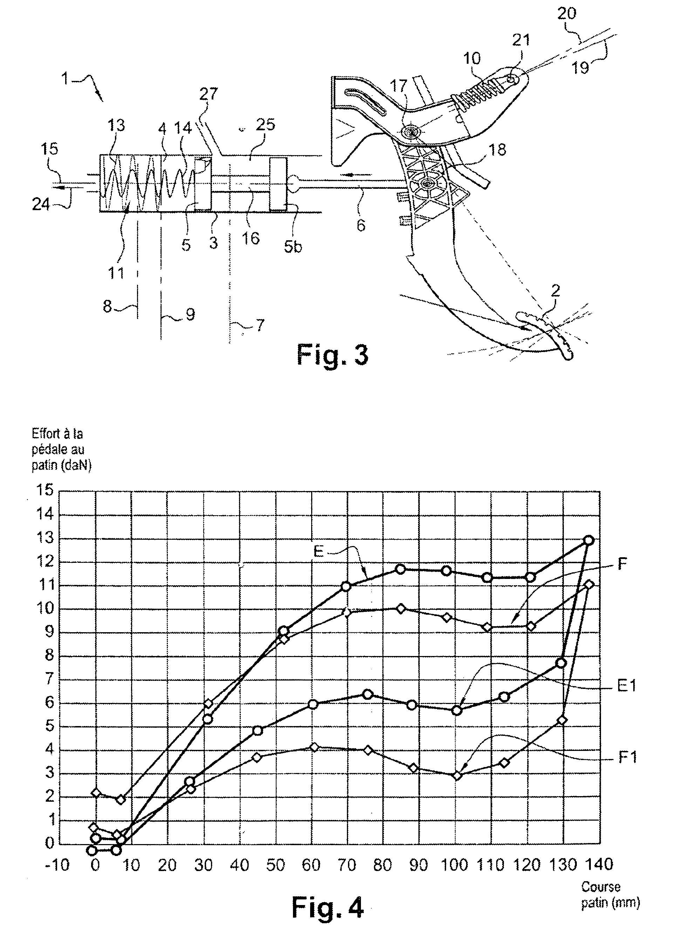

Comme annoncé précédemment, l'invention concerne un système d'embrayage hydraulique tel que représenté sur la figure 3.

Ce système est composé d'une pédale d'embrayage 2 montée à rotation autour d'un axe fixe 17. La pédale est représentée en cours d'enfoncement, dans une position située entre la position d'embrayage maximale 7 et la position intermédiaire 9.

En position d'embrayage, la tête du piston 5 coulissant dans la chambre 4 est alignée avec le trait pointillé 7. En position intermédiaire 9, la tête du piston 5 est positionnée en contact avec le premier ressort 13 dont l'extrémité libre est alignée avec le trait pointillé 9 et dont l'autre extrémité est en butée contre une paroi de la chambre 4. En position de débrayage, la tête du piston 5 est alignée avec le trait pointillé 8. Au cours du passage du piston 5 de sa position d'embrayage maximale 7 à sa position débrayée 8, le volume de la chambre 4 délimité par le piston 5 se réduit ce qui permet d'alimenter en fluide hydraulique sous pression un cylindre d'embrayage non représenté.

Le piston 5 qui coulisse dans la chambre 4 est comprimé en permanence par un second ressort 14 de compression qui permet le retour du piston dans sa position de débrayage maximale, ce second ressort ayant une extrémité en butée contre une paroi de la chambre.

La tige d'actionnement 6 est reliée à la pédale d'embrayage 2 en un point de liaison déporté par rapport à l'axe de fixe 17. Ce point de liaison 18 est réalisé par un assemblage en chape de la tige dans une ouverture pratiquée dans la pédale 2 et par un axe de liaison 18 entre la tige d'actionnement 6 et la pédale d'embrayage 2.

La liaison entre la tige d'actionnement 6 et le piston 5 est une liaison ponctuelle réalisée par un simple appui de la tige 6 dans un creux réalisé dans la partie arrière 5b du piston 5.

Le piston 5 est cylindrique autour d'un axe de coulissement 16 et est composé d'une partie avant 5a et d'une partie arrière 5b. La partie avant 5a vient en contact permanent sur le second ressort de compression 14 et en contact avec le premier ressort 13 uniquement lorsque le piston est positionné entre la position intermédiaire 9 et la position de débrayage 8.

La partie arrière 5b est distante de la partie avant 5a et est espacée par rapport à celle-ci par l'intermédiaire d'un arbre reliant ces deux parties, de telle façon qu'une chambre intermédiaire 25 soit formée entre la partie avant et la partie arrière, cette chambre intermédiaire ayant pour paroi extérieure celle de la chambre 4 dans laquelle coulisse le piston 5. La partie avant 5a du piston 5 comporte un joint en forme de coupelle faisant étanchéité entre le pourtour du piston 5 et la paroi de la chambre 4 cette coupelle étant disposée pour venir se plaquer contre la paroi de la chambre 4 lorsque la partie avant 5a du piston subit une pression liée au fluide hydraulique compressé. La partie arrière 5b dispose également d'un joint destiné à permettre l'étanchéité entre la partie avant et la partie arrière du piston 5 et à créer la chambre intermédiaire 25.

La partie arrière comporte une zone de contact avec la tige d'actionnement 6 permettant à la tige de pousser le piston tout en restant libre de pivoter par rapport au piston, autour du point de contact entre la tige d'actionnement 6 et le piston 5.

La chambre 4 de l'émetteur hydraulique comporte deux ouvertures 26, 27, l'une étant disposée dans une partie avant 5a de l'émetteur en vis à vis par rapport à la partie avant 5a du piston. Cette première ouverture 26 est destinée à être reliée au cylindre d'embrayage par l'intermédiaire d'un flexible haute pression. La seconde ouverture 27 est placée à distance de la première ouverture 26. Cette seconde ouverture 27 est reliée à un réservoir de fluide hydraulique. Cette seconde ouverture 27 est disposée de manière que lorsque le piston positionné entre sa position intermédiaire 9 et sa position de débrayage 8, la seconde ouverture 27 débouche dans la chambre intermédiaire 25 du piston 5. Cette seconde ouverture 27 est également disposée sur la paroi de la chambre 4 de manière à ce qu'elle débouche devant la partie avant du piston 5, dans la chambre 4, lorsque le piston est en position d'embrayage 7. Ainsi, en position d'embrayage 7, les première et seconde ouvertures 26 et 27 communiquent entre elles par l'intermédiaire de la chambre 4.

Le ressort d'assistance 10 exerce en un point de la pédale déporté par rapport à l'axe fixe 17, un effort selon un axe d'effort 19 mobile au cours du coulissement du piston de sa position maximale d'embrayage jusqu'à sa position de débrayage.

Cet axe d'effort 19 est l'axe de symétrie principal du ressort d'assistance 10 qui peut être un ressort de compression ou de traction.

Lorsque cet axe d'effort 19 est aligné et passe par l'axe fixe de rotation 17 de la pédale, la pédale est alors en position de chevillement. Dans cette position, le piston adopte également une position dite de chevillement située entre sa position maximale d'embrayage 9 et sa position de débrayage 8. Dans la position de chevillement, la force développée par le ressort d'assistance 10 sur la pédale n'exerce aucun couple de rotation de la pédale par rapport à sont axe fixe 17. Passé cette position de chevillement, c'est à dire après enfoncement de la pédale et coulissement du piston vers sa position de débrayage, le ressort d'assistance 10 exerce alors un couple sur la pédale ayant tendance à aider son enfoncement et assistant ainsi le passage du piston 5 vers sa position de débrayage 8.

Lors de son coulissement vers sa position de débrayage 8, le piston 5 passe par sa position intermédiaire au moment où il entre en contact avec le premier ressort 13 ce qui augmente la raideur globale du moyen élastique de rappel. Ainsi, le moyen élastique de rappel qui se compose des premier et second ressorts 13, 14 qui cumule donc les raideurs respectives de ces ressorts et cela tout au long de la course du piston 5 entre sa position intermédiaire 9 et sa position de débrayage 8. Toutefois l'effort résultant sur la pédale qui est augmenté par la présence du premier ressort 13 peut être abaissé en augmentant le couple d'assistance généré par le ressort d'assistance 10 sur la pédale. Une telle augmentation peut se faire en augmentant la raideur du ressort d'assistance 10 et/ou sa précontrainte et/ou en augmentant son excentration par rapport à l'axe fixe 17.

La figure 4 représente une première courbe E d'efforts à la pédale d'embrayage 2, en fonction de la course de la pédale pour le système selon l'invention sans ressort d'assistance 10, et une seconde courbe F d'efforts à la pédale d'embrayage, en fonction de la course de la pédale pour le système selon l'invention avec ressort d'assistance 10.

Les efforts maximums à la pédale des courbes E et F sont respectivement de 13 et 11 daN et sont atteints pour une course d'enfoncement de pédale de 140 mm, c'est à dire lorsque le piston est en position de débrayage. Sauf pour ce qui concerne la position de débrayage, l'effort de débrayage maximum des courbes E et F est toujours inférieur à ce qu'il est sur les courbes A et B respectives de la figure 2 qui représentent des courbes d'efforts pour des dispositifs de l'art antérieur.

L'invention permet donc une réduction des efforts de débrayage sur la majeur partie de la course de la pédale.

Dans le même temps les efforts minimaux de retour E1 et F1 des courbes E et F sont respectivement de 6 et 3 daN, ce qui est suffisant pour permettre une remontée de la pédale lors de son retour de la position de débrayage vers sa position d'embrayage.

L'invention permet donc une amélioration de l'ergonomie de la pédale en réduisant les efforts lors du mouvement d'enfoncement tout en permettant un effort de retour minimum suffisant pour avoir un mouvement de retour rapide de la pédale et sans pour autant nécessiter de mécanisme encombrant et complexe.

## Revendications

1. Système d'embrayage hydraulique (1) comportant une pédale d'embrayage (2), un émetteur hydraulique d'embrayage (3) ayant une chambre (4) dans laquelle coulisse un piston (5) adapté pour être poussé par une tige d'actionnement (6) depuis une position maximale d'embrayage (7) jusqu'à une position de débrayage (8), le piston (5) adoptant une position intermédiaire (9) lors de son coulissement entre la position maximale d'embrayage (7) et la position de débrayage (8), la tige d'actionnement (6) étant reliée à la pédale d'embrayage (2) sur laquelle un ressort d'assistance (10) exerce un couple variable, l'émetteur (3) comportant des moyens élastiques de rappel (11) du piston (5) dans sa position maximale d'embrayage (7), et ces moyens élastiques de rappel (11) présentant une raideur variable en fonction de la position du piston (5) et maximale lorsque le piston (5) est situé entre sa position intermédiaire (9) et sa position maximale de débrayage (8), **caractérisé en ce que** ledit couple variable évolue, en fonction de la position de la pédale d'embrayage (2), et selon que le piston (5) se trouve entre sa position maximale d'embrayage et ladite position intermédiaire ou entre sa position intermédiaire et sa position de débrayage, entre un couple rappelant le piston (5) vers sa position maximale d'embrayage et un couple d'assistance au coulissement du piston (5) vers sa position de débrayage (8), ce couple variable passant par une valeur nulle pour ladite position intermédiaire du piston (5), dite position de chevillement.

2. Système d'embrayage hydraulique (1) selon la revendication 1, **caractérisé en ce que** des moyens élastiques de rappel (11) ont une raideur minimale lorsque le piston (5) est situé entre la position intermédiaire (9) et la position maximale d'embrayage (7).

3. Système d'embrayage hydraulique selon l'une des revendications 1 ou 2, **caractérisé en ce que** les moyens élastiques de rappel (11) comportent un premier ressort (13) adapté pour exercer une première force élastique sur le piston (5), uniquement lorsque celui-ci est positionné entre la position intermédiaire (9) et la position de débrayage (8).

4. Système d'embrayage hydraulique (1) selon la revendication 3, **caractérisé en ce que** le premier ressort (13) est un ressort de compression disposé à l'intérieur de la chambre (4) et adapté pour exercer une première force élastique opposée au coulissement du piston (5), de sa position intermédiaire (9) vers sa position de débrayage (8), et pour n'exercer aucune force élastique sur le piston (5), lors de son coulissement entre sa position maximale d'embrayage (7) et sa position intermédiaire (9).

5. Système d'embrayage hydraulique (1) selon l'une des revendications 3 à 4, **caractérisé en ce que** les moyens élastiques de rappel (11) comportent un second ressort (14) adapté pour exercer une seconde force élastique sur le piston (5), croissante lors du coulissement du piston (5) de sa position maximale d'embrayage (7) à sa position de débrayage (8).

6. Système d'embrayage hydraulique (1) selon la revendication 5, **caractérisé en ce que** le second ressort (14) est un ressort de compression ayant un axe de compression (15) parallèle à un axe de coulissement (16) du piston (5).

7. Système d'embrayage hydraulique (1) selon les revendications 4 et 5, **caractérisé en ce que** les premier et second ressorts (13, 14) sont placés coaxialement l'un par rapport à l'autre, dans la chambre (4) de l'émetteur (3).

8. Système d'embrayage hydraulique (1) selon l'une des revendications 1 à 7, **caractérisé en ce que** la pédale d'embrayage (2) est montée à rotation autour d'un axe fixe (17), **en ce que** la liaison entre la tige d'actionnement (6) et la pédale d'embrayage (2) est déportée par rapport à cet axe (17), et **en ce que** le ressort d'assistance (10) exerce, en un point de la pédale (2) déporté par rapport à l'axe fixe (17), un effort selon un axe d'effort mobile (19) au cours du coulissement du piston (5) de sa position maximale d'embrayage (7) jusqu'à sa position de débrayage (8), cet axe d'effort (19) étant aligné avec l'axe fixe (17) de rotation de la pédale (2) lorsque le piston (5) adopte sa position intermédiaire dite de chevillement.

9. Système (1) selon l'une quelconque des revendications 1 à 8, **caractérisé en ce que** le ressort d'assistance (10) est un ressort de compression ou de traction.

## Patentansprüche

1. Hydraulisches Kupplungssystem (1), das ein Kupplungspedal (2), einen hydraulischen Kupplungsgeber (3) mit einer Kammer (4) umfasst, in der ein Kolben (5) gleitet, der dazu ausgeführt ist, von einer Betätigungsstange (6) aus einer maximalen Einrückstellung (7) in eine Ausrückstellung (8) verschoben zu werden, wobei der Kolben (5) bei seiner Verschiebung zwischen der maximalen Einrückstellung (7) und der Ausrückstellung (8) eine Zwischenstellung (9) einnimmt, wobei die Betätigungsstange (6) mit dem Kupplungspedal (2) verbunden ist, auf das eine Unterstützungsfeder (10) ein variables Drehmoment ausübt, wobei der Kupplungsgeber (3) elastische Mittel (11) zum Zurückholen des Kolbens (5) in seine maximale Einrückstellung (7) umfasst, und wobei diese elastischen Rückholmittel (11) eine in Abhängigkeit von der Stellung des Kolbens (5) variable Steifigkeit aufweisen, die maximal ist, wenn sich der Kolben (5) zwischen seiner Zwischenstellung (9) und seiner maximalen Ausrückstellung (8) befindet, **dadurch gekennzeichnet, dass** sich das variable Drehmoment in Abhängigkeit von der Stellung des Kupplungspedals (2) und davon, ob sich der Kolben (5) zwischen seiner maximalen Einrückstellung und der Zwischenstellung oder zwischen seiner Zwischenstellung und seiner Ausrückstellungbefindet, zwischen einem Drehmoment, das den Kolben (5) in seine maximale Einrückstellung zurückholt, und einem Drehmoment zur Unterstützung des Gleitens des Kolbens (5) in seine Ausrückstellung (8) bewegt, wobei das variable Drehmoment einen Nullwert für die Zwischenstellung des Kolbens (5), die sogenannte Kippstellung, durchläuft.

2. Hydraulisches Kupplungssystem (1) nach Anspruch 1, **dadurch gekennzeichnet, dass** die elastischen Rückholmittel (11) eine minimale Steifigkeit aufweisen, wenn sich der Kolben (5) zwischen der Zwischenstellung (9) und der maximalen Einrückstellung (7) befindet.

3. Hydraulisches Kupplungssystem nach Anspruch 1 oder 2, **dadurch gekennzeichnet, dass** die elastischen Rückholmittel (11) eine erste Feder (13) umfassen, die dazu ausgeführt ist, eine erste elastische Kraft auf den Kolben (5) nur auszuüben, wenn sich dieser zwischen der Zwischenstellung (9) und der Ausrückstellung(8) befindet.

4. Hydraulisches Kupplungssystem (1) nach Anspruch 3, **dadurch gekennzeichnet, dass** die erste Feder (13) eine Druckfeder ist, die im Inneren der Kammer (4) angeordnet und dazu ausgeführt ist, eine dem Gleiten des Kolbens (5) aus seiner Zwischenstellung (9) in seine Ausrückstellung (8) entgegenwirkende erste elastische Kraft auszuüben und keine elastische Kraft auf den Kolben (5) auszuüben, wenn er zwischen seiner maximalen Einrückstellung (7) und seiner Zwischenstellung (9) gleitet.

5. Hydraulisches Kupplungssystem (1) nach Anspruch 3 oder 4, **dadurch gekennzeichnet, dass** die elastischen Rückholmittel (11) eine zweite Feder (14) umfassen, die dazu ausgeführt ist, eine zweite elastische Kraft auf den Kolben (5) auszuüben, die mit dem Gleiten des Kolbens (5) aus seiner maximalen Einrückstellung (7) in seine Ausrückstellung (8) ansteigt.

6. Hydraulisches Kupplungssystem (1) nach Anspruch 5, **dadurch gekennzeichnet, dass** die zweite Feder (14) eine Druckfeder ist, die eine Druckachse (15), die zu einer Gleitachse (16) des Kolbens (5) parallel ist, aufweist.

7. Hydraulisches Kupplungssystem (1) nach Anspruch 4 und 5, **dadurch gekennzeichnet, dass** die erste und die zweite Feder (13, 14) koaxial zueinander in der Kammer (4) des Kupplungsgebers (3) angeordnet sind.

8. Hydraulisches Kupplungssystem (1) nach einem der Ansprüche 1 bis 7, **dadurch gekennzeichnet, dass** das Kupplungspedal (2) um eine feste Achse (17) drehbar befestigt ist, dass die Verbindung zwischen der Betätigungsstange (6) und dem Kupplungspedal (2) von dieser Achse (17) versetzt ist, und dass die Unterstützungsfeder (10) an einem Punkt des Pedals (2), der von der festen Achse (17) versetzt ist, eine Kraft entlang einer verschiebbaren Kraftachse (19) während des Gleitens des Kolbens (5) aus seiner maximalen Einrückstellung (7) in seine Ausrückstellung (8) ausübt, wobei diese Kraftachse (19) auf die feste Drehachse (17) des Pedals (2) ausgerichtet ist, wenn der Kolben (5) seine Zwischenstellung, die sogenannte Kippstellung, einnimmt.

9. System (1) nach einem der Ansprüche 1 bis 8, **dadurch gekennzeichnet, dass** die Unterstützungsfeder (10) eine Druckfeder oder eine Zugfeder ist.

## Claims

1. Hydraulic clutch system (1) comprising a clutch pedal (2), a hydraulic clutch emitter (3) having a chamber (4) in which there slides a piston (5) designed to be pushed by an actuating rod (6) from a maximum clutch-engagement position (7) to a declutched position (8), the piston (5) adopting an intermediate position (9) as it slides between the maximum clutch-engagement position (7) and the declutched position (8), the actuating rod (6), being connected to the clutch pedal (2) on which an assist spring (10) applies a variable moment, the emitter (3) comprising elastic return means (11) for returning the piston (5) to its maximum clutch-engagement position (7) and these elastic return means (11) having a stiffness that can be varied according to the position of the piston (5) and which is at a maximum when a piston (5) is situated between its intermediate position (9) and its maximum declutched position (8), **characterized in that** said variable moment evolves, as a function of the position of the clutch pedal (2), and according to whether the piston (5) is between its maximum clutch-engagement position and said intermediate position or between its intermediate position and its declutched position, between a moment that returns the piston (5) to its maximum clutch-engagement position and a moment that assists with the sliding of the piston (5) towards its declutched position (8), this variable moment passing through a zero value for said intermediate position of the piston (5), referred to as the tipping point position.

2. Hydraulic clutch system (1) according to Claim 1, **characterized in that** elastic return means (11) have a minimal stiffness when the piston (5) lies between the intermediate position (9) and the maximum clutch engagement position (7).

3. Hydraulic clutch system according to one of Claims 1 and 2, **characterized in that** the elastic return means (11) comprise a first spring (13) designed to apply a first elastic force to the piston (5) only when the latter is positioned between the intermediate position (9) and the declutched position (8).

4. Hydraulic clutch system (1) according to Claim 3, **characterized in that** the first spring (13) is a compression spring positioned inside the chamber (4) and designed to apply a first elastic force opposing the sliding of the piston (5) from its intermediate position (9) towards its declutched position (8), and to apply no elastic force to the piston (5) when the latter is sliding between the maximum clutch engagement position (7) and the intermediate position (9) thereof.

5. Hydraulic clutch system (1) according to one of Claims 3 and 4, **characterized in that** the elastic return means (11) comprise a second spring (14) designed to apply a second elastic force to the piston (5), which force increases as the piston (5) slides from its maximum clutch engagement position (7) to its declutched position (8).

6. Hydraulic clutch system (1) according to Claim 5, **characterized in that** the second spring (14) is a compression spring having a compression axis (15) parallel to an axis of sliding (16) of the piston (5).

7. Hydraulic clutch system (1) according to Claims 4 and 5, **characterized in that** the first and second springs (13, 14) are placed coaxially in relation to one another inside the chamber (4) of the emitter (3).

8. Hydraulic clutch system (1) according to one of Claims 1 to 7, **characterized in that** the clutch pedal (2) is mounted to rotate about a fixed axis (17), **in that** the connection between the actuating rod (6) and the clutch pedal (2) is offset from this axis (17), and **in that** the assistance spring (10) applies, to a point on the pedal (2) which is offset from the fixed axis (17), a force along a force axis (19) that is able to move, as the piston (5) slides from its maximum clutch engagement position (7) to its declutched position (8), this force axis (19) being aligned with the fixed axis (17) of rotation of the pedal (2) when the piston (5) is in its intermediate position known as the tipping point position.

9. System (1) according to any one of Claims 1 to 8, **characterized in that** the assistance spring (10) is a compression spring or a tension spring.
